# EUROPÄISCHE PATENTSCHRIFT

(11) **EP 1 683 929 B1**
(45) Veröffentlichungstag und Bekanntmachung des Hinweises auf die Patenterteilung: **14.10.2015**
(21) Anmeldenummer: 06001316.6
(22) Anmeldetag: 23.01.2006
(51) Int. Cl.: E04F 15/04, B29C 63/04, E04F 15/02

(54) **Verfahren zur Herstellung eines Paneels, insbesondere Fussbodenpaneels, und Paneel, insbesondere Fussbodenpaneel**
Method of producing a panel, in particular flooring panel, and panel, in particular flooring panel
Procédé de fabrication d'un panneau, notamment d'un panneau de plancher, et panneau, notamment panneau de plancher

(30) Priorität: 21.01.2005 DE 102005003123
(43) Veröffentlichungstag der Anmeldung: 26.07.2006
(73) Patentinhaber: Fritz Egger GmbH & Co. OG, 6380 St. Johann in Tirol (AT)
(72) Erfinder: Reiter, Bruno, 6380 St. Johann in Tirol (AT)
(74) Vertreter: Cohausz & Florack

(56) Entgegenhaltungen:
- WO-A-88/00891
- WO-A-96/14971
- WO-A1-2006/058548
- DE-A1- 2 357 051
- DE-A1- 3 037 233
- DE-A1- 4 311 830
- DE-U1- 20 311 569
- JP-A- 2001 193 267
- US-A- 444 042

## Beschreibung

Die Erfindung betrifft ein Verfahren zur Herstellung eines Paneels, insbesondere Fußbodenpaneels.

Paneele und Verfahren der eingangs genannten Art sind bereits aus der Praxis bekannt. Derartige Paneele werden häufig zur Bildung eines Laminatfußbodens oder einer Decken- bzw. Wandverkleidung verwendet. Dabei lassen sich die einzelnen Paneele durch eine mechanische Verbindung, bei der es sich insbesondere um eine Rastverbindung handeln kann, zu einer flächigen Gesamtheit vereinen. Alternativ oder zusätzlich können die Paneele aber auch dazu vorgesehen sein, zur Bildung einer flächigen Gesamtheit miteinander verklebt zu werden.

Die bekannten Paneele, insbesondere Laminatfußbodenpaneele, sind in der Regel aus einem Holzwerkstoff hergestellt. Dies ist jedoch nicht zwingend, so dass die Paneele grundsätzlich auch Kunststoff als Hauptwerkstoff aufweisen können. Als Holzwerkstoffe kommen unter anderem mitteldichte Faserplatten (MDF), hochdichte Faserplatten (HDF), Spanplatten oder Oriented Strand Boards (OSB) in Frage.

Laminierte Paneele der eingangs genannten Art sind bereits aus der WO 01/96688 bekannt. Diese umfassen eine beschichtete Oberseite und je zwei parallel zueinander angeordnete Längs- und Querkanten. Jeweils eine der Längs-und Querkanten weist dabei ein Nutelement auf, während die jeweils gegenüberliegende Längs- bzw. Querkante ein Federelement aufweist. Die Nut- und Federelemente sind dabei derart ausgebildet, dass je ein Nutelement und ein Federelement zweier Paneele eine Rastverbindung bilden. Somit lässt sich aus einer Mehrzahl der bekannten Paneele ein Fußbodenbelag zusammensetzen. Die Verrastung der Paneele erfolgt dabei in horizontaler und vertikaler Richtung, so dass nach Möglichkeit entsprechend ausgebildete Stoßkanten benachbarter Paneele aneinander stoßen und eine fugenfreie Verbindung entsteht.

Darüber hinaus weisen die bekannten Paneele zwischen den Stoßkanten einer jeden Seitenkante des Paneels und dessen Oberseite Abschrägungen auf. Diese Abschrägungen werden aus einem bereits beschichteten Rohling ausgefräst und haben zur Folge, dass sich zwischen zwei benachbarten Paneelen eines Fußbodenbelangs eine V-Fuge ausbildet, womit im Folgenden eine V-förmige Fuge bezeichnet wird. Anstelle von einer V-Fuge kann auch allgemein von einer Nut gesprochen werden, die oberhalb der aneinander anliegenden Stoßkanten durch die Abschrägungen gebildet wird.

Da sich in der Praxis das Auftreten von Spalten zwischen den Stoßkanten benachbarter Paneele nicht sicher verhindern lässt, ermöglichen es die zusätzlichen Nuten, dass die eigentlichen Spalte von einem Betrachter nicht mehr als solche wahrgenommen werden und daher nicht mehr störend wirken. Für den Betrachter ist lediglich noch eine Rille wahrzunehmen, die der Nut entspricht und sich optisch harmonisch in das Gesamtbild des Fußbodenbelags einfügt. Im Falle von Laminatfußbodenpaneelen mit Holzdekor kann durch die Nut als V-Fuge letztlich eine originalgetreuere Holzfußbodenoptik erzeugt werden.

Bei dem ebenfalls aus der WO 01/96688 bekannten Verfahren zur Herstellung solcher Paneele werden die aus dem bereits beschichteten Paneelrohling ausgefrästen Abschrägungen ihrerseits beschichtet. Einerseits werden die Paneele so vor einem Eindringen von Feuchtigkeit, was beispielsweise bei der Verwendung von Holzmaterialien zu einem Aufquellen führen kann, geschützt. Andererseits kann so die V-Fuge und damit die vom Betrachter wahrgenommene Rille aus ästhetischen Gründen mit einem bestimmten Motiv versehen werden. Das Beschichten der Abschrägungen an sich erfolgt bei dem bekannten Verfahren mittels einer Transferdrucktechnik.

Darüber hinaus ist es bekannt, auf die Abschrägungen auch eine andere feuchtigkeitsabweisende Schicht aufzutragen. Bei dieser Schicht kann es sich um eine Lackschicht, eine Farbschicht oder eine Schicht aus einer anderen feuchtigkeitsabweisenden Flüssigkeit handeln.

Nachteilig bei diesem Verfahren ist, dass das Applizieren einer zusätzlichen Beschichtung auf die Abschrägungen, die in der Regel nur eine sehr geringe Breite aufweisen, mit einem erhöhten apparativen, zeitlichen und personellen Aufwand verbunden ist. Zusätzlich besteht das Problem, dass dabei leicht Verschmutzungen der Oberseite des Paneels verursacht werden, die eine Nachbehandlung, etwa ein Polieren oder dergleichen, erforderlich machen oder sogar die nachgeschalteten Produktionsanlagen beeinträchtigen können.

Ferner ist es hinsichtlich der bekannten Paneele von Nachteil, dass Fehler bei deren Herstellung die Ästhetik des verlegten Fußbodenbelags erheblich beeinträchtigen können. Zudem können bereits bei der Herstellung oder beim Gebrauch, etwa durch Abnutzungserscheinungen, Spalten zwischen den Beschichtungen entstehen. Durch diese kann dann Feuchtigkeit in die Trägerplatte eindringen und der ästhetische Eindruck des Fußbodenbelags beeinträchtigt werden. Darüber hinaus können Beschichtungen, die zwischen die Stoßkanten miteinander zu verbindender Paneele gelangen, zu einer unerwünscht hohen Reibung und damit zum Knarren des Fußbodenbelangs führen. Im Extremfall kann dadurch sogar ein sicheres Verbinden einzelner Paneele verhindert werden.

Die DE 30 37 233 A offenbart ein Verfahren gemäß dem Oberbegriff des Anspruchs 1.

Der vorliegenden Erfindung liegt daher das technische Problem zugrunde, ein Abschrägungen aufweisendes Paneel, einfacher und kostengünstiger herzustellen. Ein weiteres technisches Problem besteht darin, ein Paneel anzugeben, bei dem ein Eindringen von Feuchtigkeit sicher verhindert wird und das einen verbesserten ästhetische Eindruck einer flächigen Gesamtheit gleichartiger Paneele ermöglicht.

Das zuvor aufgezeigte technische Problem wird bei einem Verfahren der eingangs genannten Art erfindungsgemäß durch die Merkmale des Anspruchs 1 gelöst.

Bei dem erfindungsgemäßen Verfahren ist vorgesehen, dass ausgehend von einem Rohling des Paneels, bei dem es sich im Wesentlichen um eine mit einer Beschichtung versehene Trägerplatte handelt, in einem ersten Schritt direkt unterhalb der Beschichtung an einer ersten und einer zweiten Seitenkante, die einander gegenüberliegend angeordnet sind, eine Abschrägung aus der Trägerplatte ausgefräst wird. Dadurch wird erreicht, dass ein Teil der Beschichtung über die ausgefrästen Abschrägungen übersteht. Dabei ist es bevorzugt, dass das Material der Trägerplatte zwischen den Abschrägungen und der Beschichtung vollständig entfernt wird und die Beschichtung somit "freigelegt" wird. In einem zweiten Schritt werden die freigelegten und über die Abschrägungen überstehenden Abschnitte der Beschichtung mit einem Klebemittel versehen, um in einem dritten Schritt die Beschichtung und die Abschrägungen miteinander verkleben zu können. Alternativ oder zusätzlich können auch die Abschrägungen mit einem Klebemittel versehen werden.

Durch das erfindungsgemäße Verfahren ist es somit möglich, die einstückige Beschichtung nicht nur auf der Oberseite des Paneels, sondern auch auf den Abschrägungen desselben vorzusehen. Der apparative, zeitliche und personelle Aufwand zum Aufbringen einer separaten Beschichtung auf die Abschrägungen ist damit nicht mehr erforderlich. Vielmehr ist es so, dass zur Beschichtung ein Teil der bereits auf der Oberseite des Paneels vorgesehenen Beschichtung verwendet wird. Dieser muss lediglich ggf. mit Klebstoff versehen, umgebogen und gegen die Abschrägungen gedrückt werden, was herstellungstechnisch ohne weiteres durchführbar ist.

Um aus einer Mehrzahl von im Wesentlichen gleichartig ausgebildeten Paneelen ein Fußbodenbelag bilden zu können, sollten die fertigen, unter Verwendung des erfindungsgemäßen Verfahrens hergestellten Paneele an der ersten Seitenkante ein Federelement und an der zweiten Seitenkante ein Nutelement aufweisen. Dabei ist es selbstverständlich so, dass das Federelement in das Nutelement wenigstens eines benachbarten Paneels zur Bildung einer Klebe- oder Rastverbindung eingreifen kann und umgekehrt.

Im Zusammenhang mit dem erfindungsgemäßen Verfahren ist das Aufbringen eines Klebemittels auf die Beschichtung der, insbesondere thermischen, Aktivierung eines bereits vorhandenen Klebemittels gleichgestellt. Entscheidend ist es lediglich, durch einen Verfahrensschritt ausreichende adhäsive Eigenschaften zu erzeugen, die ein dauerhaftes Verkleben von Beschichtung und Abschrägungen erlauben. Nichtsdestotrotz ist es bevorzugt, ein Klebemittel aufzubringen, da gleichzeitig solche Beschichtungen bevorzugt sind, die einer zuvor beschriebenen Aktivierung nicht zugänglich sind.

Bei einer besonders bevorzugten Ausführungsform des erfindungsgemäßen Verfahrens ist vorgesehen, dass als Beschichtung eine Laminatbeschichtung verwendet wird. Laminatbeschichtungen gehören zum Stand der Technik und weisen meist eine Mehrzahl von mit Kunstharz, vorzugsweise mit Melamin-, Melamin/Harnstoff- oder Phenolharzen imprägnierten Papieren auf. Diese werden in der Regel unter erhöhtem Druck und Temperatur entweder direkt (Direct Pressure Laminat (DPL)) oder erst nach deren Verarbeitung zu einem Schichtstoff verpresst, der dann mit der Trägerplatte verpresst wird (High Pressure Laminate (HPL) oder Continous Pressure Laminat (CPL)). Die vorgenannten Papiere können in ihrer Farbe frei gestaltet oder mit beliebigen Dekoren wie Holz-, Fliesen- oder Steindekoren bedruckt sein.

Neben Laminatbeschichtungen können auch Folien, insbesondere Kunststofffolien oder Furniere als Beschichtung verwendet werden. Bevorzugte Furniere weisen auf der Rückseite ein Gewebe auf, damit das Furnier umgefaltet werden zu können, ohne zu brechen.

Gemäß der Erfindung wird die Beschichtung beim Ausfräsen der Abschrägungen an der ersten Seitenkante, welche einer Federseite des späteren Paneels entspricht, eingekürzt und somit überflüssige Beschichtung entfernt. Auf diese Weise kann auch ein Überstehen der Beschichtung über die Abschrägungen des fertigen Paneels verhindert werden.

Zum Verkleben an sich bietet es sich an, ein Klebemittel auf Basis von Polyurethan (PU), ein thermoplastisches Klebemittel und/oder ein Zwei-Komponenten-Klebemittel, allgemein auch ein Reaktionsklebemittel, zu verwenden. In Bezug auf thermoplastische Klebemittel sind insbesondere solche auf Basis von Polyamid (PA), Ethylvinylacetat (EVA) oder Polyvinylacetat (PVAc) bevorzugt. Letztere sind auch unter der Bezeichnung Weißleim bekannt. Die vorgenannten Klebemittel sind allesamt leicht handhabbar, greifen die Beschichtung nicht an und ermöglichen eine sehr feste und dauerhafte Verklebung.

Bei der Verwendung einer Laminatbeschichtung oder einer Beschichtung mit ähnlichen Eigenschaften kann es von Vorteil sein, wenn die Beschichtung vor dem Verkleben thermisch verformt wird. Dadurch ist ein Verkleben der Beschichtung mit den Abschrägungen in einfacher Weise möglich. Zudem lässt sich so ohne weiteres verhindern, dass es zu Brüchen der Beschichtung kommt. Unter einer thermischen Verformung wird in diesem Zusammenhang eine Erwärmung der Beschichtung zur Verbesserung der Biegsamkeit und ein anschließendes Anlegen der Beschichtung an die Form der Abschrägungen verstanden. Die hierbei einzustellenden Temperaturen und die Art und Weise der Verformung sind in entscheidendem Maße von der verwendeten Beschichtung abhängig und aus dem Stand der Technik bekannt.

Aus herstellungstechnischer Sicht ist es bevorzugt, dass erst nach dem Verkleben von Beschichtung und Abschrägung an der ersten Seitenkante das Federelement und an der zweiten Seitenkante das Nutelement ausgefräst wird. In diesem Fall kann auf einfache Weise sichergestellt werden, dass die Beschichtung nicht über die Abschrägung des fertigen Paneels übersteht. Es versteht sich in diesem Zusammenhang, dass das Ausfräsen des Federelements und des Nutelements grundsätzlich auch vor dem Ausfräsen der Abschrägungen erfolgen kann. Dann kann jedoch ein aufwendigerer Verfahrensschritt zum Ausfräsen der Abschrägungen und/oder ein zusätzlicher Nachbearbeitungsschritt notwendig werden, um einen exakten Abschluss von Beschichtung und Abschrägung sicherzustellen.

Im Folgenden wird die Erfindung anhand dreier Ausführungsbeispiele mit Bezug auf die beigefügte Zeichnung näher erläutert. In der Zeichnung zeigen
- Fig. 1: ein Ausführungsbeispiel des erfindungsgemäßen Verfahrensablaufs in schematischer Darstellung und ein erstes Ausführungsbeispiel eines hierdurch erzeugten, nicht beanspruchten Paneels in Seitenansicht;
- Fig. 2: eine Verbindung zweier Paneele gemäß eines zweiten bevorzugten Ausführungsbeispiels des Paneels in Seitenansicht und
- Fig. 3: eine Verbindung zweier Paneele gemäß eines dritten bevorzugten Ausführungsbeispiels des Paneels in Seitenansicht.

Im Zusammenhang mit der bevorzugten Ausgestaltung des erfindungsgemäßen Verfahrens wird der Einfachheit halber der Begriff Paneel nicht nur für das eigentliche Paneel, das ohne weitere Nachbearbeitung zur Bildung eines Fußbodenbelags verwendet werden kann, sondern auch für beliebige Vorstufen des Paneels bei dessen Herstellung verwendet. Die entsprechende Bedeutung des Begriffs Paneel ergibt sich im Folgenden ohne weiteres aus dem Kontext.

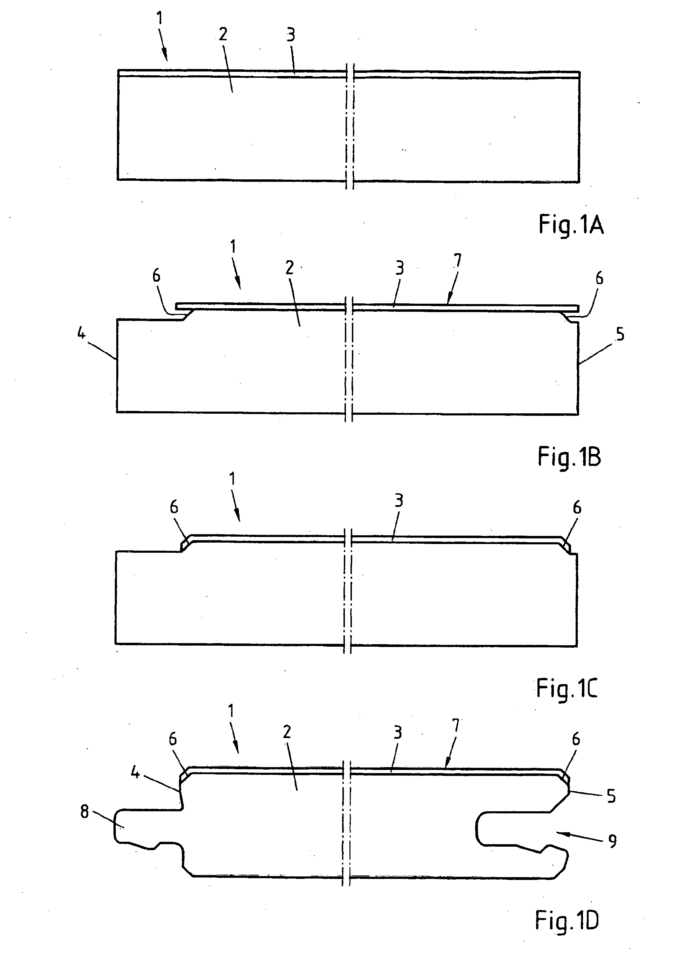

Fig. 1A zeigt einen sogenannten Rohling eines Paneels 1, der eine Trägerplatte 2 und eine auf dieser im Wesentlichen vollflächig aufgebrachte Beschichtung 3 aufweist. Bei dem dargestellten und insoweit bevorzugten Ausführungsbeispiel handelt es sich um eine Trägerplatte 2 aus einem HDF-Material, die mit einer Laminatbeschichtung versehen ist. Dabei ist die Beschichtung 3 zur besseren Anschaulichkeit mit einer vergrößerten Dicke dargestellt.

Der Rohling ist vorzugsweise zusammen mit einer Mehrzahl von gleichartigen Rohlingen durch Zuschneiden einer großflächig mit einer Laminatbeschichtung versehenen HDF-Platte erhalten worden. Dadurch kann auf einfache Weise sichergestellt werden, dass der Rohling definierte Abmessungen aufweist und sich die Beschichtung 3 ohne überzustehen exakt bis zu den Schmalseiten des Rohlings erstreckt. Damit die interessierenden Details der relevanten Schmalseiten deutlich gezeigt werden können, ist der Rohling lediglich in Seitenansicht dargestellt.

Nicht im Einzelnen dargestellt ist, dass der Rohling eine quaderförmige Gestalt aufweist und in einer Seitenansicht aus einer Richtung parallel zu den Längsseiten gezeigt ist. Grundsätzlich ist das Verfahren allerdings nicht in Bezug auf eine bestimmte Form, Abmessung oder Ausrichtung des Rohlings bei der im Folgenden näher beschriebenen Bearbeitung beschränkt. Es versteht sich im Zusammenhang mit der Trägerplatte 2, dass diese auch mehrschichtig aufgebaut sein und beispielsweise neben einer Kernschicht eine zusätzliche Schicht zur Trittschalldämpfung, eine Gegenzugschicht aus Laminat oder dergleichen aufweisen kann.

Fig. 1B zeigt das Paneel 1 aus Fig. 1A, bei dem direkt unterhalb der Beschichtung 3 an einer ersten Seitenkante 4 und einer dieser gegenüberliegenden zweiten Seitenkante 5 eine Abschrägung 6 aus der Trägerplatte 2 ausgefräst worden sind. Diese Abschrägungen 6 erstrecken sich dabei wie angedeutet und grundsätzlich bevorzugt über die gesamte Länge der Seitenkanten 4, 5.

Wie Fig. 1 zu entnehmen ist, bilden die Abschrägungen 6 im Wesentlichen ebene Flächen, welche in einem Winkel von 45° in Bezug auf eine Oberseite 7 des Paneels 1 geneigt sind. Damit ergibt sich beim Verbinden zweier Paneele eine sogenannte V-Fuge. Fertigungstechnisch kann es günstig sein, wenn die Abschrägungen 6 alternativ oder zusätzlich zu der ebenen Ausgestaltung angrenzend zu der Oberseite 7 des Paneels 1 abgerundet werden. Auf diese Weise kann nicht nur ein gleichmäßigerer Übergang zwischen der Oberseite 7 und den Abschrägungen 6 erreicht, sondern auch die Gefahr eines Bruchs der Beschichtung 3 an dieser Stelle verringert werden. Wesentlich ist, dass die Abschrägungen 6 weiter als deren gewünschte, spätere Erstreckung in einer senkrecht auf der ersten Seitenkante 4 bzw. der zweiten Seitenkante 5 stehenden Richtung in die Trägerplatte 2 hineingefräst werden. Das Ausfräsen muss letztlich so weit erfolgen, dass die Überstände der Beschichtung 3 ausreichen, um die Abschrägungen 6 des fertigen Paneels 1 vollständig zu bedecken. Die Abmessungen der vorzunehmenden Ausfräsungen ergeben sich unter Berücksichtigung der gewünschten Form und Breite der Abschrägungen 6 sowie unter Zuhilfenahme an sich bekannter geometrischer Beziehungen.

Fig. 1B ist weiter zu entnehmen, dass die Beschichtung 3 im Vergleich zu dem Paneel 1 aus Fig. 1A in einer Richtung senkrecht zur ersten Seitenkante 4 eingekürzt worden ist. Dies bietet grundsätzlich fertigungstechnische Vorteile.

In Fig. 1C ist das Paneel 1 aus Fig. 1B dargestellt, nachdem die überstehenden Abschnitte der Beschichtung 3 zunächst an ihrer Unterseite mit einem Klebemittel versehen, erwärmt, in Richtung der Abschrägungen 6 umgebogen und mit den Abschrägungen 6 verklebt worden sind. Bei dem dargestellten und insoweit bevorzugten Ausführungsbeispiel des erfindungsgemäßen Verfahrens handelt es sich bei dem Klebemittel um einen PU-basierten Klebstoff. Zudem erfolgte die Erwärmung zu dem Zweck, die Beschichtung 3 einfacher umbiegen zu können. Dieses Vorgehen wird auch als thermisches Verformen bezeichnet und ist insbesondere bei der Verwendung von Laminatbeschichtungen ratsam, da diese bereits zuvor ausgehärtet und dementsprechend spröde sein können. Wie sich aus der Fig. 1C weiter ergibt, schließt die Beschichtung 3 nun exakt mit den äußeren Enden der Abschrägungen 6 ab. Dies ist zwar grundsätzlich bevorzugt, aber keinesfalls erforderlich, wie sich aus Fig. 1D ergibt.

Fig. 1D zeigt das Paneel 1 aus Fig. 1C, bei dem aus der Trägerplatte 2 an der ersten Seitenkante 4 ein Federelement 8 und an der zweiten Seitenkante 5 ein Nutelement 9 ausgefräßt worden ist. Man spricht in diesem Zusammenhang auch von Profilieren. Wird das Profilieren als letzter Verfahrensschritt durchgeführt, können noch Korrekturen hinsichtlich der Beschichtung 3 und/oder der Abschrägungen 6 durchgeführt werden, indem unter Umständen vorhandene Überstände weggefräst werden. Grundsätzlich kann die Profilierung aber auch bereits zusammen mit dem Ausfräsen der Abschrägungen 6 erfolgen. Alternativ ist es aber auch möglich, dass der ursprünglich eingesetzte Rohling bereits ein Federelement und ein Nutelement aufweist.

Fig. 1D zeigt zugleich eine erste bevorzugte Ausführungsform des Paneels 1. Bei diesem Paneel 1 handelt es sich um ein Fußbodenpaneel mit einem Federelement 8 an einer ersten Seitenkante 4 und einem Nutelement 9 an einer zweiten Seitenkante 5, wobei diese Seitenkanten 4, 5 einander gegenüber liegen sowie das Federelement 8 sowie das Nutelement 9 zur Verbindung des Paneels 1 mit wenigstens einem weiteren gleichartigen Paneel ausgebildet sind. Darüber hinaus weist das Paneel 1 eine Oberseite 7 auf, die im Wesentlichen eben ausgebildet ist. Zwischen der Oberseite 7 und der ersten Seitenkante 4 sowie zwischen der Oberseite 7 und der zweiten Seitenkante 5 ist jeweils eine Abschrägung 6 angeordnet. Dabei sind die Abschrägungen 6 derart ausgebildet, dass jeweils eine Abschrägung zweier miteinander verbundener, gleichartig ausgebildeter Paneele zusammen eine Nut bilden, die hier V-förmig ist und auch als V-Fuge bezeichnet werden kann.

Das Paneel 1 weist eine einstückig ausgebildete Beschichtung 3 auf, die nicht nur auf der Oberseite 7 des Paneels, sondern auch auf den Abschrägungen 6, und zwar im Wesentlichen vollflächig angeordnet ist. Dies bietet den Vorteil, dass eine optisch ansprechende Oberseite 7 des Paneels 1 und insbesondere ein verbesserter ästhetischer Eindruck eines aus erfindungsgemäßen Paneelen 1 gebildeten Fußbodenbelags erzielt wird. Gleichzeitig sind die Abschrägungen 6 auf diese Weise sicher vor dem Eindringen von Feuchtigkeit geschützt, da dort keine Nahtstellen oder Stoßstellen existieren.

In dem dargestellten und insoweit bevorzugten Ausführungsbeispiel handelt es sich bei der Beschichtung 3 um eine Laminatbeschichtung, wie sie aus dem Stand der Technik bekannt ist. Diese Art der Beschichtung 3 ermöglicht eine Vielzahl unterschiedlicher Dekore und verleiht der Oberseite 7 und den Abschrägungen 6 des Paneels 1 eine lange Haltbarkeit. Grundsätzlich kommen aber auch Folienbeschichtungen oder Funierbeschichtungen in Frage. Die Funierbeschichtungen weisen dabei insbesondere eine sehr dünne Funierschicht und eine Gewebeschicht, welche für eine ausreichende Flexibilität der Funierschicht sorgt, auf.

Nicht im Einzelnen dargestellt ist, dass das Paneel in einer weiter bevorzugten Ausführungsform ein weiteres Federelement an einer dritten Seitenkante und ebenfalls ein weiteres Nutelement an einer vierten Seitenkante aufweisen kann. Auch die dritte und die vierte Seitenkante sind dabei bevorzugt gegenüberliegend angeordnet. Dies ist insbesondere bei Fußbodenbelägen zweckmäßig und erlaubt es, die Paneele untereinander sowohl an ihren Längsseiten als auch an ihren Querseiten miteinander zu verbinden. Die Feder- und Nutelemente können dabei grundsätzlich jede aus dem Stand der Technik bekannte Ausgestaltung aufweisen. Bei derartigen Paneelen bietet es sich an, dass auch an der dritten Seitenkante und der vierten Seitenkante eine Abschrägung vorgesehen ist. Auch auf diesen zusätzlichen Abschrägungen ist dabei bevorzugt die Beschichtung 3 in der im Zusammenhang mit den Abschrägungen 6 an den Seitenkante 4, 5 eingehend dargelegten Weise angeordnet. Dies führt grundsätzlich zu den gleichen Vorteilen, die bereits im Zusammenhang mit den eingehend beschriebenen, beschichteten Abschrägungen 6 genannt worden sind.

Unabhängig von der Anzahl der mit Abschrägungen versehenen Seitenkanten ist es zweckmäßig, dass sich die Abschrägungen im Wesentlichen über die gesamte Länge der entsprechenden Seitenkanten erstrecken, um einen gleichmäßigeren und somit verbesserten optischen Eindruck beim Verlegen solcher Paneele erzeugen zu können.

Paneelen mit zwei Federseiten und zwei Nutseiten können an allen Seitenkanten mit weiteren Paneelen verbunden werden. Die Abschrägungen sind entlang aller Kanten ausgebildet. Die Beschichtung muss dann in den Eckbereichen ausgeschnitten sein, um in beiden Richtungen auf die im rechten Winkel zueinander stehenden Abschrägungen um umgefaltet und aufgeklebt werden zu können

Ein besonders harmonisches Bild des Fußbodenbelags ergibt sich mit dem dargestellten Paneel 1 dadurch, dass die Abschrägungen 6 eine Erstreckung in einer Richtung parallel zur Oberseite 7 und senkrecht zur entsprechenden Seitenkante 4, 5 von 1 mm bis 3 mm aufweist. Vorzugsweise beträgt die vorgenannte Erstreckung dabei etwa 2 mm.

Bei dem in Fig. 1D dargestellten und insoweit bevorzugten ersten Ausführungsbeispiel des erfindungsgemäßen Paneels sind die Abschrägungen 6 eben ausgeführt und gegenüber der Oberseite 7 in einem Winkel von 45° geneigt. Dies führt bei einem Fußbodenbelag zu einem ansprechenden Fugenbild. Zudem sind die im Wesentlichen ebenen Abschrägungen 6 einfach herzustellen, so dass sich wirtschaftliche Vorteile ergeben können. Auch wenn ein Winkel zwischen den Abschrägungen 6 und der Ebene der Oberseite 7 von 45° bevorzugt ist, kann dieser Winkel grundsätzlich auch einen anderen Wert zwischen 30° und 60° aufweisen, wenn dies im Einzelfall Vorteile bietet.

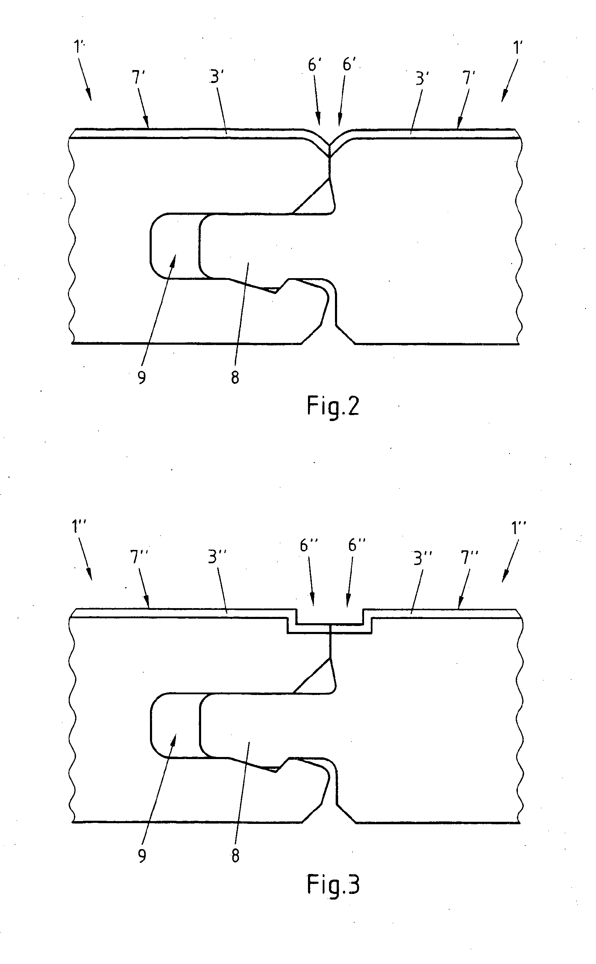

In Fig. 2 sind ein nutseitiges und ein federseitiges Ende zweier Paneele 1' dargestellt, die einer zweiten bevorzugten Ausführungsform des Paneels entsprechen. Die Paneele 1' sind durch das Eingreifen des Federelements 8 des einen in das Nutelement 9 des anderen Paneels 1' miteinander verbunden, wobei sich die nicht im Einzelnen bezeichneten, oberhalb der Nut- und Federelemente 8, 9 angeordneten Stoßkanten der einzelnen Paneele 1' berühren. Wie sich aus der Fig. 2 weiter ergibt, sind bei dem zweiten bevorzugten Ausführungsbeispiel die Abschrägungen 6' am Übergang zur Oberseite 7' abgerundet. Aufgrund dessen ergeben sich allmähliche Übergänge von den Oberseiten 7' zu den Abschrägungen 6' und entstehen dort keine Kanten, wie dies bei dem in Fig. 1D gezeigten Paneel 1 der Fall ist. Die in den Fig. 1D und 2 dargestellten Paneele 1, 1' ähneln sich allerdings insoweit, als dass die Abschrägungen 6, 6' zumindest bereichsweise eben ausgeführt sind.

Die in Fig. 2 dargestellten Abrundungen ermöglichen ein einfacheres Anformen der Beschichtung 3' an die Abschrägungen 6'. Gleichzeitig wird die Gefahr verringert, dass die Beschichtung 3' am Übergang von der Oberseite 7' zu einer Abschrägung 6' bricht, was ästhetische Beeinträchtigungen und ein Eindringen von Feuchtigkeit zur Folge haben könnte.
Besonders zweckmäßig für das Anformen der Beschichtung an die Abschrägungen und die Haltbarkeit der Beschichtung im Bereich der Abschrägungen kann es sein, wenn die Abschrägungen konvex ausgebildet sind. In diesem Zusammenhang versteht es sich, dass die Abschrägungen grundsätzlich auch konkav ausgebildet sein können, was jedoch hinsichtlich der Langlebigkeit der Beschichtung am Verbindungsbereich zwischen der Oberseite und den Abschrägungen weniger bevorzugt ist.

Die Abschrägungen und die sich damit ergebende Nut kann letztlich eine beliebige Form aufweisen. So ist es beispielsweise auch möglich, eine Nut mit einem im Wesentlichen ebenen Nutgrund und mit beliebig ausgeführten Flanken zu realisieren.

Wie sich aus Fig. 3 ergibt, die ein nutseitiges und ein federseitiges Ende zweier miteinander verbundener Paneele 1'' gemäß einer dritten bevorzugten Ausführungsform des Paneels zeigt, kann die Nut auch eine Stufenform aufweisen. In diesem Fall verlaufen die Abschrägungen 6" zunächst senkrecht und gehen dann zu den Stoßkanten hin in eine ebene Fläche über. Die Abschrägungen 6'' weisen somit selbst eine Stufenform auf, so dass sich eine im Querschnitt rechtwinklige Nut an der Oberseite 7" der Paneele 1'' ausbildet.

## Patentansprüche

1. Verfahren zur Herstellung eines Paneels (1), insbesondere Fußbodenpaneels,
- wobei das Paneel (1) eine Trägerplatte (2) und eine Beschichtung (3) aufweist,
- bei demdirekt unterhalb der Beschichtung (3) an einer ersten Seitenkante (4) und einer dieser gegenüberliegenden zweiten Seitenkante (5) je eine Abschrägung (6) aus der Trägerplatte (2) ausgefräst wird,
- bei dem ein Klebemittel auf die Abschrägungen (6) und/oder die Beschichtung (3) im Bereich der Abschrägungen (6) aufgebracht wird und
- bei dem die Beschichtung (3) und die Abschrägungen (6) miteinander verklebt werden,
**dadurch gekennzeichnet, daß**
beim Ausfräsen der Abschrägungen (6) die Beschichtung (3) an der ersten Seitenkante (4) eingekürzt wird.

2. Verfahren nach Anspruch 1,
bei dem als Beschichtung (3) eine Laminatbeschichtung verwendet wird.

3. Verfahren nach Anspruch 1 oder 2,
bei dem als Klebemittel ein thermoplastischer Klebstoff, ein Polyurethanklebstoff oder ein Reaktionsklebstoff auf die Abschrägungen (6) und/oder die Beschichtung (3) aufgebracht wird.

4. Verfahren nach einem der Ansprüche 1 bis 3,
bei dem die Beschichtung (3) vor dem Verkleben thermisch verformt wird.

5. Verfahren nach einem der Ansprüche 1 bis 4,
bei dem, vorzugsweise nach dem Aufkleben der Beschichtung (3), an der ersten Seitenkante (4) ein Federelement (8) und an der zweiten Seitenkante (5) ein Nutelement (9) aus der Trägerplatte (2) ausgefräst wird.

## Claims

1. Method for producing a panel (1), in particular a floor panel,
- wherein the panel (1) comprises a core board (2) and a coating (3),
- in which a bevelled edge (6) is milled out of the core board (2) in each case directly beneath the coating (3) on a first side edge (4) and on a second side edge (5) opposite it,
- in which an adhesive is applied to the bevelled edges (6) and/or to the coating (3) in the area of the bevelled edges (6), and
- in which the coating (3) and the bevelled edges (6) are bonded together,
**characterised in that** the coating (3) is shortened on the first side edge (4) when the bevelled edges (6) are milled out.

2. Method according to Claim 1, in which a laminate coating is used as the coating (3).

3. Method according to Claim 1 or 2, in which a thermoplastic adhesive, a polyurethane adhesive or a reaction adhesive is applied as the adhesive to the bevelled edges (6) and/or to the coating (3).

4. Method according to any one of Claims 1 to 3, in which the coating (3) is thermally deformed before the bonding takes place.

5. Method according to any one of Claims 1 to 4, in which preferably after adhesively bonding the coating (3), a tongue element (8) is milled out of the core board (2) on the first side edge (4) and a groove element (9) is milled out of the core board (2) on the second side edge (5).

## Revendications

1. Procédé pour la fabrication d'un panneau (1), en particulier d'un panneau de plancher,
- dans lequel le panneau (1) comporte une plaque de support (2) et un revêtement (3),
- dans lequel un chanfrein (6) est réalisé par fraisage dans la plaque de support (2), directement en dessous du revêtement (3), respectivement sur un premier bord latéral (4) et sur un deuxième bord latéral (5) opposé,
- dans lequel un agent adhésif est appliqué sur les chanfreins (6) et/ou sur le revêtement (3), dans la région des chanfreins (6), et
- dans lequel le revêtement (3) et les chanfreins (6) sont collés ensemble,
**caractérisé en ce que** lors du fraisage des chanfreins (6), le revêtement (3) est raccourci sur le premier bord latéral (4).

2. Procédé selon la revendication 1,
dans lequel un revêtement de laminé est utilisé comme revêtement (3).

3. Procédé selon la revendication 1 ou 2,
dans lequel une colle thermoplastique, une colle polyuréthane ou une colle réactive est appliquée en tant qu'agent adhésif sur les chanfreins (6) et/ou sur le revêtement (3).

4. Procédé selon l'une des revendications 1 à 3,
dans lequel le revêtement (3) est déformé thermiquement avant le collage.

5. Procédé selon l'une des revendications 1 à 4,
dans lequel, de préférence après le collage du revêtement (3), un élément élastique (8) est fraisé sur le premier bord latéral (4) et un élément formant rainure (9) est fraisé sur le deuxième bord latéral (5) dans la plaque de support (2).
